# EUROPÄISCHE PATENTSCHRIFT

(11) **EP 0 665 158 B1**
(45) Veröffentlichungstag und Bekanntmachung des Hinweises auf die Patenterteilung: **09.04.1997**
(21) Anmeldenummer: 95101108.9
(22) Anmeldetag: 27.01.1995
(51) Int. Cl.: B62D 25/16, B62D 25/18

(54) **Kotflügelhalter**
Mud-guard holder
Manche pour garde-boue

(30) Priorität: 27.01.1994 DE 9401381 U
(43) Veröffentlichungstag der Anmeldung: 02.08.1995
(73) Patentinhaber: KÖVER GMBH & CO. KG Metall- und Kunststoffverarbeitung, D-21614 Buxtehude (DE)
(72) Erfinder: Jürges, Heinz-Henning, D-21614 Buxtehude (DE)
(74) Vertreter: Grättinger & Partner

(56) Entgegenhaltungen:
- DE-A- 3 617 628
- DE-U- 7 433 498
- DE-U- 9 207 100
- DE-U- 9 401 381

## Beschreibung

Die vorliegende Erfindung betrifft einen Kotflügelhalter umfassend einen Bügel mit zwei endseitig an diesem vorgesehenen Befestigungsplatten und eine mit dem Bügel verbindbare Klemmschelle.

Derartige Kotflügelhalter sind aus der deutschen Offenlegungsschrift 36 17 628 und dem deutschen Gebrauchsmuster 92 07 100 bekannt. In dem Bügel ist dabei jeweils ein sich in dessen Längsrichtung erstreckendes Langloch vorgesehen. Dieses dient zur längsverschiebbaren Befestigung der Klemmschelle, mit welcher der Kotflügelhalter an einem am Fahrgestell des betreffenden Fahrzeugs befestigten Rohr festgeklemmt werden kann. In beiden Befestigungsplatten ist jeweils eine Durchbrechung zur Aufnahme einer Schraube vorgesehen, mit welcher der Kotflügel an dem Kotflügelhalter befestigt werden kann. Die Befestigungsplatten sind dabei durch doppeltes Abkröpfen eines im übrigen den Bügel bildenden streifenförmigen Flachstahls gebildet.

Bei den bekannten Kotflügelhaltern ist die Langzeitstabilität nicht immer zufriedenstellend. Insbesondere kann nicht sicher ausgeschlossen werden, daß der Kotflügelhalter nach lange andauernder Benutzung im Übergangsbereich von dem Bügel zu den Befestigungsplatten bricht. Dies ist jedoch wegen der Gefährdung des nachfolgenden Verkehrs durch einen ganz oder teilweise abgerissenen Kotflügel nicht zu tolerieren.

Der vorliegenden Erfindung liegt die Aufgabe zugrunde, einen gattungsgemäßen Kotflügelhalter zu schaffen, der auch unter ungünstigsten Bedingungen (Schwingungen und dgl.) eine hohe Langzeitstabilität besitzt. Dabei soll der Kotflügelhalter nicht nennenswert schwerer sein als bekannte Kotflügelhalter.

Gemäß der vorliegenden Erfindung wird diese Aufgabe dadurch gelöst, daß der Bügel einen U-förmigen, nach unten offenen Querschnitt aufweist, daß die Breite der Befestigungsplatten größer ist als die des Bügels und daß die Seitenflächen des Bügels flächig in die Befestigungsplatten übergehen. Alle drei Merkmale tragen in Kombination miteinander zu einer vorzüglichen Langzeitstabilität des erfindungsgemäßen Kotflügelhalters bei. Durch die U-förmige Profilierung des Bügels wird dessen Steifigkeit beträchtlich erhöht. Demzufolge verformt sich der Bügel auch bei starken Stößen nur minimal. Indem die Seitenflächen des Bügels unmittelbar in die Befestigungsplatten übergehen, wobei die Befestigungsplatten breiter sind als der Bügel und somit seitlich über diesen überstehen, wird auch der Übergangsbereich von dem Bügel zu den Befestigungsplatten entscheidend ausgesteift. Auch in diesem mechanisch stark beanspruchten Übergangsbereich vom Bügel auf die Befestigungsplatten führen selbst heftige Stöße somit nicht zu einer Verformung, die die Langzeitfestigkeit des Kotflügelhalters beeinträchtigen könnte. Die Ausformung der Befestigungsplatten in der Weise, daß ihre Breite größer ist als diejenige des Bügels, gestattet dabei nicht nur, daß die Seitenflächen des Bügels in die Befestigungsplatten einmünden. Die vergrößerte Breite der Befestigungsplatten trägt zudem dazu bei, die Auflagefläche der Befestigungsplatten auf dem Kotflügel zu vergrößern, so daß die Gefahr einer Beschädigung des häufig aus Kunststoff bestehenden Kotflügels im Bereich seiner Befestigung an den Befestigungsplatten reduziert wird.

Bei einer besonders bevorzugten Weiterbildung des erfindungsgemäßen Kotflügelhalters beträgt die Höhe der Seitenflächen des Bügels zwischen dem 0,3- und dem 0,8-fachen Wert der Breite des Bügels. In diesem Bereich ergibt sich eine hervorragende Festigkeit bei minimalem Materialeinsatz und somit bei minimalem Gewicht des Kotflügelhalters.

Die Mittelfläche des Bügels, das ist der sich zwischen den beiden Seitenflächen erstreckende, das Langloch aufweisende Bereich, weist zusätzlich zu ihrer Krümmung in Längsrichtung bevorzugt eine Wölbung quer zur Längsrichtung auf. Auch dieses Merkmal trägt zu einer Vergleichmäßigung des Kraftflusses innerhalb des Kotflügelhalters und somit zu einer Erhöhung von dessen Langzeitstabilität bei.

Zweckmäßigerweise besitzen die Befestigungsplatten keinerlei Ecken sondern sind vielmehr vollkommen abgerundet. Hierdurch wird die Gefahr einer Beschädigung des Kotflügels im Bereich der Ecken der Befestigungsplatten eliminiert. Auch dieses Merkmal dient somit der Erhöhung der langfristigen Sicherheit der Befestigung des Kotflügels.

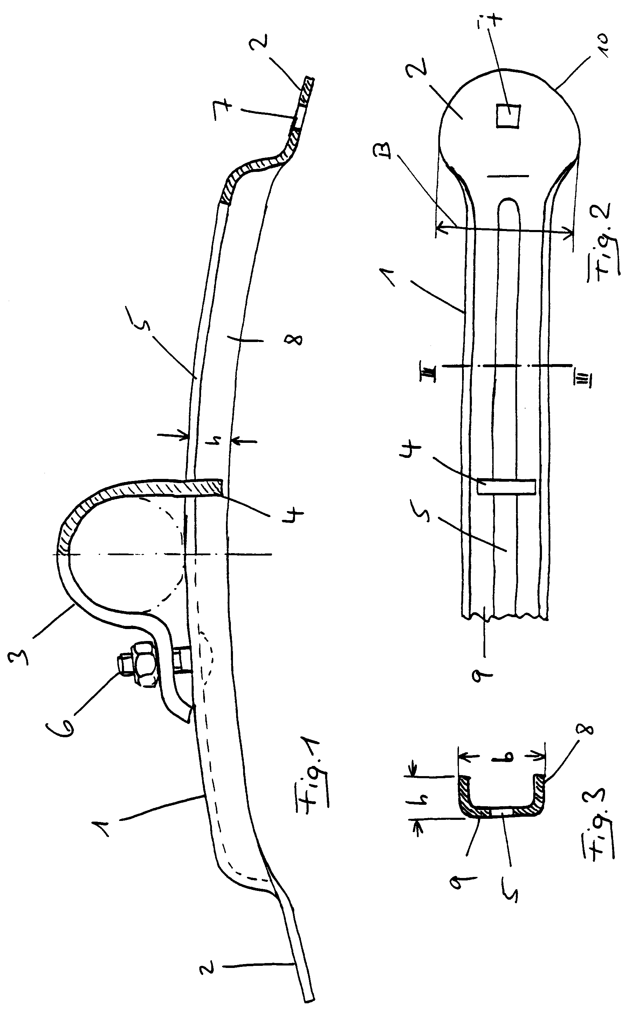

Im folgenden wird die Erfindung anhand eines in der Zeichnung dargestellten Ausführungsbeispiels näher erläutert. Dabei zeigt
- Fig. 1: in kombinierter Darstellung Längsschnitt und Seitenansicht einer bevorzugten Ausführungsform des erfindungsgemäßen Kotflügelhalters,
- Fig. 2: eine Ansicht von unten auf den Kotflügelhalter gemäß Fig. 1 und
- Fig. 3: einen Schnitt entlang der Linie III-III in Fig. 2.

Der in der Zeichnung dargestellte Kotflügelhalter umfaßt einen Bügel 1 mit zwei endseitig an diesem vorgesehenen Befestigungsplatten 2 sowie eine Klemmschelle 3. Die Klemmschelle 3 ist in bekannter Weise mit dem Bügel 1 dadurch verbunden, daß der T-förmig ausgebildete Kopf 4 der Klemmschelle 3 in das Langloch 5 eingreift, welches sich in dem Bügel 1 in dessen Längsrichtung erstreckt. Zur Befestigung der Klemmschelle 3 an dem Bügel 1 dient desweiteren in bekannter Weise eine Schraube 6. Zur Befestigung eines - nicht dargestellten - Kotflügels an dem Kotflügelhalter weist jede Befestigungsplatte 2 ein Vierkantloch 7 auf. Alternativ zu dem Vierkantloch könnte, insbesondere wenn der Kotflügelhalter mit dem Kotflügel vernietet werden soll, ein Rundloch vorgesehen sein.

Der Bügel 1 besitzt einen U-förmigen, nach unten offenen Querschnitt (Fig. 3) mit zwei Seitenflächen 8 und einer zwischen diesen liegenden Mittelfläche 9, in der sich das Langloch 5 erstreckt. Die Höhe h der Seitenflächen 8 beträgt etwa die Hälfte der Breite b des Bügels 1.

Die Befestigungsplatten besitzten eine Breite B die größer ist als die Breite b des Bügels 1. Dabei sind die Übergangsbereiche von dem Bügel 1 auf die beiden Befestigungsplatten 2 gerundet; die Seitenflächen 8 des Bügels gehen dabei in die über die Breite b des Bügels hinausgehenden seitlichen Abschnitte der Befestigungsplatten 2 über.

Die Befestigungsplatten 2 sind längs ihres gesamten Umfangs 10 gerundet; sie weisen keinerlei Ecke auf.

## Patentansprüche

1. Kotflügelhalter umfassend einen Bügel (1) mit zwei endseitig an diesem vorgesehenen Befestigungsplatten (2) und eine mit dem Bügel (1) verbindbare Klemmschelle (3),
dadurch gekennzeichnet,
- daß der Bügel (1) einen U-förmigen, nach unten offenen Querschnitt aufweist,
- daß die Breite (B) der Befestigungsplatten (2) größer ist als die Breite (b) des Bügels (1) und
- daß die Seitenflächen (8) des Bügels flächig in die Befestigungsplatten (2) übergehen.

2. Kotflügelhalter nach Anspruch 1,
dadurch gekennzeichnet,
daß die Höhe (h) der Seitenflächen (8) des Bügels (1) zwischen dem 0,3- und 0,8-fachen Wert der Breite (b) des Bügels beträgt.

3. Kotflügelhalter nach Anspruch 1,
dadurch gekennzeichnet,
daß die Mittelfläche (9) des Bügels (1) quer zu ihrer Längserstreckung geringfügig gewölbt ist.

4. Kotflügelhalter nach Anspruch 1,
dadurch gekennzeichnet,
daß die Befestigungsplatten (2) längs ihres Umfangs (10) vollständig gerundet sind.

## Claims

1. Bumper mounting comprising a bracket (1) with two fastening plates (2) provided on the end sides thereof and a clamp strap (3) able to be connected to the bracket (1), characterised in that,
- the bracket (1) has a U-shaped cross-section open on the under side,
- the width (B) of the fastening plates (2) is greater than the width (b) of the bracket (1) and
- the side faces (8) of the bracket pass in a flat manner into the fastening plates (2).

2. Bumper mounting according to Claim 1, characterised in that the height (h) of the side faces (8) of the bracket (1) amounts to between 0.3 and 0.8 times the value of the width (b) of the bracket.

3. Bumper mounting according to Claim 1, characterised in that the middle surface (9) of the bracket (1) is curved slightly at right angles to its longitudinal extent.

4. Bumper mounting according to Claim 1, characterised in that the fastening plates (2) are completely rounded along their periphery (10).

## Revendications

1. Support de fixation d'aile comprenant un étrier (1), comportant deux plaques de fixation (2) prévues à l'extrémité de celui-ci, et un collier de serrage (3) pouvant être relié à l'étrier (1), caractérisé en ce que
l'étrier (1) présente une section en forme de U ouverte vers le bas,
la largeur (B) des plaques de fixation (2) est supérieure à la largeur (b) de l'étrier (1) et
les surfaces latérales (8) de l'étrier se fondent dans la surface des plaques de fixation (2).

2. Support de fixation d'aile selon la revendication 1, caractérisé en ce que la hauteur (h) des surfaces latérales (8) de l'étrier (1) est de 0,3 à 0,8 fois supérieure à la largeur (b) de l'étrier.

3. Support de fixation d'aile selon la revendication 1, caractérisé en ce que la surface centrale (9) de l'étrier (1) est très légèrement bombée transversalement à son étendue longitudinale.

4. Support de fixation d'aile selon la revendication 1, caractérisé en ce que les plaques de fixation (2) sont complètement arrondies le long de leur périphérie (10).
